**Europäisches Patentamt**

(19) **European Patent Office**

**Office européen des brevets**

(11) Veröffentlichungsnummer: **0 136 429**
**B1**

(12) **EUROPÄISCHE PATENTSCHRIFT**

(45) Veröffentlichungstag der Patentschrift:
25.01.89

(51) Int. Cl.⁴: **C 07 F 7/14**

(21) Anmeldenummer: **84108405.6**

(22) Anmeldetag: **17.07.84**

(54) **Verfahren zur Herstellung von 2-Phenylethylchlorsilanen.**

(30) Priorität: **02.09.83 DE 3331682**

(43) Veröffentlichungstag der Anmeldung:
**10.04.85 Patentblatt 85/15**

(45) Bekanntmachung des Hinweises auf die Patenterteilung:
**25.01.89 Patentblatt 89/4**

(84) Benannte Vertragsstaaten:
**DE FR GB IT**

(56) Entgegenhaltungen:
**US-A-3 925 434**

(73) Patentinhaber: **HÜLS TROISDORF
AKTIENGESELLSCHAFT, Postfach 11 65, D-5210
Troisdorf (DE)**

(72) Erfinder: **Seiler, Claus-Dietrich, Dr., In der Klus
10, D-7888 Rheinfelden (DE)**
Erfinder: **Vahlensieck, Hans-Joachim, Dr., Im
Habiken 2, D-7867 Wehr (DE)**

EP 0 136 429 B1

## Beschreibung

Gegenstand der vorliegenden Erfindung ist ein Verfahren zur Herstellung von 2-Phenylethylchlorsilanen, bei dem Hydrogenchlorsilane in Gegenwart von Platinkatalysatoren an Styrol angelagert werden. Das Verfahren drängt die Bildung der 1-Phenylethylverbindungen zurück.

Die Anlagerung von ungesättigten organischen Verbindungen an Siliciumverbindungen mit einer oder zwei Si-H-Bindungen in Gegenwart von Platinkatalysatoren ist allgemein bekannt (vgl. J. Am. Ch. Soc. 79, 1957, S. 974-979). Bei dieser, auch als Additionsreaktion bezeichneten Umsetzung, wird beim Einsatz von ungesättigten organischen Verbindungen mit endständigen Mehrfachbindungen der Silylrest überwiegend an das endständige Kohlenstoffatom addiert; jedoch erfolgt in mehr oder weniger großem Umfang auch eine Addition des Silylrestes am benachbarten Kohlenstoffatom, wodurch die Ausbeuten an der überwiegend gewünschten, den Silylrest in Endstellung enthaltenden, Verbindung zurückgehen.

Bei der Umsetzung von Styrol mit Si-H-Verbindungen kommt noch der Umstand hinzu, daß unter den Reaktionsbedingungen leicht eine Teilpolymerisation des Styrols zu Polystyrol stattfindet, wodurch wiederum die Ausbeute an Phenylethylsilanen zurückgeht. Diese Polymerisationsneigung ist besonders groß, wenn die Platinverbindungen auf Aktivkohle als Trägermaterial eingesetzt werden.

Es sind deshalb schon mehrere Verfahren beschrieben, die diese Nachteile zu umgehen versuchen. Alle heterogenen Systeme, bei denen die Bildung von ungewünschtem 1-Phenylethylsilan zurückgedrängt wird, haben jedoch weiterhin den Nachteil einer zu großen Bildung von Styrol-Polymerisaten.

Andererseits haben die Verfahrensweisen, bei denen die Bildung von Styrol-Polymerisaten zurückgedrängt wird, wie z. B. Verwendung komplexer Platin- oder Rhodiumverbindungen als Katalysatoren und/oder der Einsatz bestimmter Lösungsmittel bisher keine befriedigende Lösung der genannten Probleme gebracht.

In der DE-PS-2 602 171 wird der Zusatz von Phenothiazin und anderer stickstoffhaltiger Verbindungen als Promotor bei der Additionsreaktion beschrieben; dort wird auch angegeben, daß bei der Verwendung dieser Verbindung bei der Umsetzung von Styrol mit Trichlorsilan ausschließlich das β-Addukt (d. h. 2-Phenylethyltrichlorsilan) gebildet wird, so daß das dort beschriebene Verfahren eine Lösung der genannten Probleme zu bringen scheint.

Diese ausschließliche Bildung des 2-Phenylethyltrichlorsilans tritt jedoch nur bei Anwendung tiefer Temperaturen und geringen Umsatzgeschwindigkeiten ein. Wenn dagegen diese Verfahrensweise bei Temperaturen ab etwa 50°C durchgeführt wird, erhält man wieder beachtliche Mengen an 1-Phenylethyltrichlorsilan, besonders wenn hohe Dosiergeschwindigkeiten, wie sie für technische Zwecke erforderlich sind, gewählt werden, um möglichst große Ausbeuten pro Raum- und Zeiteinheit zu erhalten.

Es bestand deshalb die Aufgabe, die platinkatalysierte Additionsreaktion von Hydrogenchlorsilanen an Styrol so zu führen, daß die Bildung von 1-Phenylethylchlorsilanen und Polymeren des Styrols unterdrückt wird, auch wenn die Reaktion bei Temperaturen bis 100°C bei großen Durchsätzen an Ausgangsprodukten ausgeführt wird.

In Erfüllung dieser Aufgabe wurde nun ein Verfahren zur Herstellung von 2-Phenylethylchlorsilanen durch Additioon Hydrogenchlorsilanen an Styrol in homogenen Systemen in Gegenwart von Platinkatalysatoren gefunden, das dadurch gekennzeichnet ist, daß die Umsetzung in Gegenwart von Benzothiazol bei Temperaturen zwischen 40 und 100°C durchgeführt wird.

Bei Anwendung der erfindungsgemäßen Verfahrensweise erhält man praktisch nur das gewünschte 2-Phenylethylchlorsilan und die Ausbeute an eingesetztem Styrol liegt über 90 %. Bei den bevorzugten Durchführungsformen der Unteransprüche liegen die Ausbeuten an eingesetztem Styrol sogar über 98 %. Diese guten Resultate erhält man auch, wenn die Umsetzung bei erhöhten Temperaturen bis zu etwa 100°C durchgeführt wird und wenn hohe Raum/Zeitausbeuten, wie sie für Abläufe im technischen Maßstab gefordert werden, angestrebt werden, so daß z. B. mehr als 10 Mol (etwa 1,15 l) Styrol/h pro 100 Mole vorgelegtem Trichlorsilan umgesetzt werden können.

Die Menge des anzuwendenden Benzothiazols kann in weiten Bereichen schwanken. Als Richtwert kann die Menge des eingesetzten Platinkatalysators dienen. Die Benzothiazolmenge sollte dabei mindestens molmäßig der Menge des Platinkatalysators entsprechen. Das bevorzugte Molverhältnis von Platinkatalysator zu Benzothiazol liegt zwischen 1 : 2 und 1 : 50. Größere Mengen sind prinzipiell möglich, bringen aber keine weiteren ersichtlichen Vorteile.

Der Platinkatalysator wird in den an sich bekannten Mengen eingesetzt. Bei reinen Ausgangsstoffen kann der Katalysator bereits in Mengen von $10^{-8}$ Mol pro Mol Styrol eingesetzt werden. Im Allgemeinen wird er jedoch in Mengen zwischen $10^{-7}$ und $10^{-3}$ Mol pro Mol Styrol eingesetzt. Der bevorzugte Bereich liegt zwischen $1 \times 10^{-6}$ und $1 \times 10^{-5}$ Mol pro Mol Styrol.

Der bevorzugte Platinkatalysator ist $H_2PtCl_6$. Es können jedoch auch alle anderen, für die Additionsreaktion bekannten einsetzbaren Platinverbindungen verwendet werden, sofern sie im Reaktionsgemisch, insbesondere in dem Hydrogenchlorsilan, löslich sind. Der Katalysator selbst wird in einer homogenen Lösung, bevorzugt in Aceton, zugegeben.

Die erfindungsgemäße Verfahrensweise wird zweckmäßigerweise bei Temperaturen zwischen 40 und 90°C durchgeführt. Der bevorzugte Temperaturbereich liegt zwischen 65 und 75°C. Bei Temperaturen über 90°C können sich bei zu geringem Einsatz von Benzothiazol wieder geringe Mengen an 1-Phenylethylchlorsilanen bilden.

Um die Anwesenheit von Lösungsmitteln während der Umsetzung zu vermeiden, wird in dem höheren Temperaturbereich vorzugsweise bei dem sich einstellenden Überdruck gearbeitet, der zwischen 2 und 6 bar liegen kann. Prinzipiell ist es jedoch auch möglich, bei Normaldruck die Additionsreaktion ablaufen zu lassen. Dann ist es jedoch bei Temperaturen oberhalb des Siedepunktes der Hydrogenchlorsilane erforderlich, in Gegenwart eines inerten Lösungsmittels mit einem geeigneten Siedepunkt zu arbeiten; damit wird der Siedebereich des Systems erhöht und der Reaktionsablauf kann im bevorzugten Temperaturbereich ablaufen.

Die bevorzugte Hydrogenchlorsilen Komponente ist das Trichlorsilan. Als Hydrogenchlorsilane sind jedoch auch beispielsweise Hydrogenmethyldichlorsilan, Hydrogenalkyldichlorsilane mit 2 bis 8 C-Atomen in der Alkylgruppe oder Dihydrogendichlorsilan einsetzbar.

Das Verfahren kann kontinuierlich oder diskontinuierlich durchgeführt werden. Bei der diskontinuierlichen Arbeitsweise wird zweckmäßigerweise das Hydrogenchlorsilan vorgelegt und Styrol mit der für die gewünschte Raum/Zeitausbeute notwendigen Dosiergeschwindigkeit eingeleitet. Der Katalysator und das Benzothiazol sind dabei vorzugsweise in dem vorgelegen Hydrogenchlorsilan enthalten.

Bei einer kontinuierlichen Arbeitsweise werden beispielsweise die Reaktionskomponenten durch einen Röhrenreaktor, in dem die Reaktanden auf die gewünschte Reaktionstemperatur erhitzt wird, durchgeschleust. Dabei können die Verweilzeiten der Reaktanden in dem Reaktor so gewählt werden, daß Raum/Zeit-Ausbeuten entsprechend der diskontinuierlichen Verfahrensweise erhalten werden.

Sowohl bei der kontinuierlichen als auch bei der diskontinuierlichen Arbeitsweise erfolgt die Aufarbeitung der Reaktionsprodukte auf an sich bekannte Weise, vorzugsweise durch fraktionierte Destillation des 2-Phenylethylchlorsilans.

2-Phenylethylchlorsilane, insbesondere das 2-Phenylethyltrichlorsilan, sind technisch wichtige Zwischenprodukte bei der Herstellung von Korrosionsschutzmitteln. Sie werden weiterhin zur Modifikation von Silikonen eingesetzt.

Die folgenden Beispiele 1 bis 4 werden alle in einer Apparatur folgender Konstruktion durchgeführt: eine Stahlblase mit etwa 30 l Inhalt, die über einen Einsatzheizer mit Wasser der gewünschten Temperatur beheizbar ist, ist über eine Stahlleitung mit einem über der Blase befindlichen Röhrenkühler (Oberfläche ca. 1 m²) verbunden. Aus dem Unterteil des Kühlers führt eine Leitung abwärts auf ein zu einem Syphon gebogenes Rohr (Ø = 20 mm), das in den Blasendeckel einmündet. Die Blase selbst ist mit einem Manometer und einer Temperaturanzeige ausgestattet und besitzt eine über eine Druckpumpe führende Zuleitung für die Ausgangsprodukte. Der Kühler wird mit Wasser als Kühlmedium betrieben.

Bei den folgenden Beispielen 1 bis 4 werden in die Blase jeweils 13 500 g (100 Mol) Trichlorsilan, dem 5 ml einer Lösung von 1 g $H_2PtCl_6 \times 6H_2$ in 19 ml Aceton ( = 94,5 mg = $4,8 \times 10^{-4}$ Mol) zugefügt waren, vorgelegt. Die Katalysatormenge entspricht etwa 4,3 ppm Platin, auf die Summe der Reaktanden bezogen. Durch Aufgabe von Heißwasser auf die Schlangen des Einsatzheizers wird das System auf etwa 70° C erwärmt, wobei sich ein Innendruck von 3,2 bar einstellt. Am Röhrenkühler oberhalb der Blase setzt Kondensation der Trichlorsilan-Dämpfe ein. Die anfallenden Kondensate werden über den Syphon in die Blase zurückgeführt. Nach Beginn der Kondensation werden jeweils 8320 g Styrol (80 mol = 9,2 l) über eine Druckpumpe mit jeweils unterschiedlichen Dosiergeschwindigkeiten in die Blase eingeführt. Nach beendeter Zuführung läß man noch kurz nachreagieren, kühlt dann das System ab und zieht das erhaltene Reaktionsprodukt ab. Dieses wird gaschromatographisch auf den Gehalt an 1-Phenylethyltrichlorsilan (in Flächenprozenten) untersucht. Anschließend werden beide Isomeren abdestilliert und die Ausbeute auf eingesetztes Styrol bestimmt.

## Beispiel 1

Die oben beschriebene allgemeine Arbeitsweise wird ohne Zusatz von einem Promotor bei einer Dosiergeschwindigkeit von 2 l Styrol/Stunde durchgeführt. Die Ergebnisse gehen aus Tabelle 1 hervor.

## Beispiel 2

Die allgemeine Arbeitsweise des Beispiels 1 wird mit Zusatz von unterschiedlichen Mengen an Phenothiazin durchgeführt. Es wurden 370 mg bzw. 1000 bzw. 10 000 mg Phenothiazin eingesetzt. Bei der genannten Dosiergeschwindigkeit erhielt man bereits Anteile zwischen 2,5 und 12,3 % an 1-Phenylethyltrichlorsilan in dem erhaltenen Gemisch der beiden Isomeren. Die detaillierten Ergebnisse gehen aus Tabelle 1 hervor, in der die Versuche mit den unterschiedlichen Mengen an Phenothiazin unter 2a bis 2c genannt sind.

## Beispiel 3

Die Arbeitsweise des Beispiels 2 wird wiederholt mit dem Unterschied, daß anstelle des Phenothiazins unterschiedliche Mengen, die aus Tabelle 1 hervorgehen, an Benzothiazol eingesetzt wurden. Bereits beim Einsatz von $22 \times 10^{-5}$ Mol Benzothiazol ( = 1,4 ppm, bezogen auf die Reaktionspartner) sind nur noch vernachlässigbar geringe Mengen des 1-Isomeren in dem Reaktionsprodukt. Die Ausbeute, bezogen auf eingesetztes Styrol liegt bereits bei diesen geringen Mengen über den Werten, die mit Phenothiazin erreicht werden, wenn dieses in Mengen eingesetzt wird, die um etwa zwei Zehnerpotenzen höher liegen. Die einzelnen Ergebnisse gehen aus Tabelle 1 hervor.

In der Tabelle wird aus Vergleichsgründen Benzothiazol als Promotor bezeichnet; die ppm-Angabe bezieht sich auf die Summe der beiden Reaktionspartner. Der Anteil des 1-Isomeren ist der Anteil von 1-Phenylethyltrichlorsilan in dem erhaltenen Gemisch aus 1-Phenylethyltrichlorsilan und 2-Phenylethyltrichlorsilan. Die Ausbeute umfaßt beide Isomeren.

**Tabelle 1**

| Beispiel | | Promotor | | Dosiergeschwindigkeit | Anteil des | Ausbeute bez. |
|---|---|---|---|---|---|---|
| | | mg | ppm | l/h | 1-Isomeren | auf Styrol |
| 1 | - | - | - | 2 | 21,6 | 76,4 |
| 2 a | Phenothiazin | 370 | 17 | 2 | 12,3 | 86,9 |
| b | " | 1000 | 45,8 | 2 | 8,5 | 87,6 |
| c | " | 10 000 | 458 | 2 | 2,2 | 90,0 |
| 3 a | Benzothiazol | 30 | 1,4 | 2 | 0,15 | 90,1 |
| b | " | 100 | 4,36 | 2 | | |
| c | " | 250 | 11,4 | 2 | nicht nach-<br>weisbar | 98,9 |
| d | " | 1000 | 45,8 | 2 | " | 98,8 |
| e | " | 3000 | 137,4 | 2 | " | 99,0 |

**Beispiel 4**

Die Arbeitsweise des Beispiels 3 wurde wiederholt mit dem Unterschied, daß die Dosiergeschwindigkeit des Styrols auf 4 l/h erhöht wurde. Weiterhin wurden wiederum die eingesetzten Mengen an Benzothiazol variiert. Die Ergebnisse gehen aus Tabelle 2 hervor.

**Tabelle 2**

| Benzothiazol | | Anteil | Ausbeute | |
|---|---|---|---|---|
| mg | ppm | 1-Isomeres<br>(Flächen %) | % | |
| 30 | | 1,4 | 0,4 | 89,1 |
| 2500 | | 11,4 | 0,01 | 98,2 |
| 1000 | | 45,8 | 0,01 | 97,9 |
| 3000 | | 137,4 | 0,01 | 98,6 |

Zum Vergleich wurde unter den gleichen Verfahrensbedingungen die Umsetzung in Gegenwart von 1000 mg (= 45,8 ppm, bezogen auf die Reaktionspartner) an Phenothiazin anstelle des Benzothiazols durchgeführt. Das erhaltene Rohprodukt hatte einen Anteil von 11,4 Flächenprozent an 1-Phenylethyltrichlorsilan; die Ausbeute an beiden Isomeren, bezogen auf eingesetztes Styrol, betrug nur 87,1 %.

**Beispiel 5**

In eine Apparatur analogen Aufbaues, wie sie in den vorhergehenden Beispielen benutzt wurde, jedoch entsprechend größer dimensioniert (Volumen des Reaktionskessels ca. 3500 l), werden in die Blase 1755 kg Trichlorsilan zusammen mit 38 g in 720 ml Aceton gelöster Platinchlorwasserstoffsäure und 40 g Benzothiazol vorgelegt.

Die in der Anlage befindliche Flüssigkeitsmenge wird auf ca. 72°C erwärmt, wodurch sich ein Innendruck von ca. 3,5 bar einstellt. Im Verlauf von 6 Stunden werden 1200 l Styrol mit einer Druckpumpe eindosiert, wobei sich die Temperatur geringfügig erhöht. Nach Ablauf einer Nachreaktionszeit wird dem Reaktionsgemisch eine Probe entnommen und diese gaschromatographisch untersucht. Ein Gehalt an 1-Phenylethyltrichlorsilan ist

neben 2-Phenylethyltrichlorsilan nicht erkennbar.

Das Reaktionsgemisch wird anschließend destillativ aufgearbeitet. Die auf den Styroleinsatz bezogene Ausbeute an 2-Phenylethyltrichlorsilan beträgt 96,7 %.

**Patentansprüche**

1. Verfahren zur Herstellung von 2-Phenylethylchlorsilanen durch Addition von Hydrogenchlorsilan an Styrol in homogenen Systemen in Gegenwart von Platinkatalysatoren, dadurch gekennzeichnet, daß die Umsetzung in Gegenwart von Benzothiazol bei Temperaturen zwischen 40 und 100°C durchgeführt wird.

2. Verfahren gemäß Anspruch 1, dadurch gekennzeichnet, daß das Benzothiazol in solchen Mengen eingesetzt wird, daß das Molverhältnis von Platinkatalysator : Benzothiazol zwischen 1 : 2 und 1 : 50 liegt.

3. Verfahren gemäß Anspruch 1 oder 2, dadurch gekennzeichnet, daß die Umsetzung bei Temperaturen zwischen 65 und 75°C durchgeführt wird.

4. Verfahren gemäß einem der Ansprüche 1 bis 3, dadurch gekennzeichnet, daß die Umsetzung bei einem Überdruck von 2 bis 6 bar durchgeführt wird.

5. Verfahren gemäß einem der Ansprüche 1 bis 4, dadurch gekennzeichnet, daß Styrol in vorgelegtes Hydrogenchlorsilan eingeleitet wird.

6. Verfahren gemäß Anspruch 5, dadurch gekennzeichnet, daß pro 100 Mol vorgelegtem Trichlorsilan mindestens 10 Mol Styrol/Stunde eingeleitet werden.

**Claims**

1. Process for the production of 2-phenylethyl chlorosilanes by the addition of hydrogen chlorosilane to styrene in homogeneous systems in the presence of platinum catalysts, characterized in that the reaction is carried out in the presence of benzothiazole at temperatures of between 40 and 100°C.

2. Process according to claim 1, characterized in that the benzothiazole is used in such quantities that the molar ratio of platinum catalyst benzothiazole lies between 1 : 2 and 1 : 50.

3. Process according to claim 1 or 2, characterized in that the reaction is carried out at temperatures of between 65 and 75°C.

4. Process according to one of claims 1 to 3, characterized in that the reaction is carried out at a pressure of 2 to 6 bar in excess of atmospheric pressure.

5. Process according to one of claims 1 to 4, characterized in that styrene is introduced into the hydrogen chlorosilane provided.

6. Process according to claim 5, characterized in that at least 10 mol styrene/per hour are introduced per 100 mol of trichlorosilane provided.

**Revendications**

1. Procédé de préparation des 2-phényléthylchlorosilanes, par addition d'hydrogénochlorosilane sur du styrène dans des systèmes homogènes, en présence de catalyseurs au platine, caractérisé en ce qu'on conduit la réaction en présence de benzothiazole, à des températures comprises entre 40 et 100°C.

2. Procédé selon lu revendication 1, caractérisé en ce qu'on utilise le benzothiazole en des quantités telles que le rapport molaire entre le catalyseur au platine et le benzothiazole se situe entre 1 : 2 et 1 : 50.

3. Procédé selon la revendication 1 ou 2, caractérisé en ce qu'on conduit la réaction à des températures comprises entre 65 et 75°C.

4. Procédé selon l'une des revendications 1 à 3, caractérisé en ce qu'on conduit la réaction sous une surpression de 2 à 6 bars.

5. Procédé selon l'une des revendications 1 à 4, caractérisé en ce qu'on introduit le styrène dans l'hydrogénochlorosilane placé antérieurement.

6. Procédé selon la revendication 5, caractérisé en ce qu'on introduit, pour 100 moles de trichlorosilane placé antérieurement, au moins 10 moles de styrène par heure.